# EUROPEAN PATENT APPLICATION

(11) **EP 3 981 710 A1**
(43) Date of publication of application: **13.04.2022**
(21) Application number: 21382900.5
(22) Date of filing: 07.10.2021
(51) Int. Cl.: B65D 90/00, B65D 90/34, G21F 5/00, G21F 5/12, G21F 5/14

(54) **PORTABLE FACILITY FOR NUCLEAR WASTE MANAGEMENT**

(30) Priority: 08.10.2020 ES 202031021
(71) Applicant: Enusa-Ensa, AIE, 28040 Madrid (ES)
(72) Inventor: SANCHEZ FERNÁNDEZ, Leandro, 28040 MADRID (ES); RODRIGUEZ CANO, David, 28040 MADRID (ES); LLORET LLORCA, Miriam, 28040 MADRID (ES)
(74) Representative: Herrero & Asociados, S.L.

(57) **Abstract**

Portable nuclear waste management facility comprising at least six ISO HC 40' containers modified in width and height, with at least four containers forming a first floor of the facility and two other containers placed on top of a second floor of the facility, wherein the four lower containers include openings in the vertical faces that constitute an entrance passage (3) and an exit passage (4) of the facility, wherein the containers are connected to each other by watertight closures and wherein the first floor is intended to house a waste management room and changing rooms and the second floor is adapted to house the supply air treatment facilities, an electrical and control room and an air extraction system.

## Description

### TECHNICAL SECTOR

The invention belongs to the field of nuclear installations. In particular, it relates to a portable and configurable radioactive waste treatment facility that can be easily installed in any existing nuclear power plant.

### BACKGROUND OF THE INVENTION

The radioactive waste management in nuclear or radioactive facilities is an inherent activity in their operation. During its operating cycle, as a result of the different activities carried out, radioactive waste is produced, which together with the quantity thereof, it entails a series of significant actions for its storage, treatment, conditioning and final disposal.

Some nuclear power plants have an area specifically designed to carry out operations related to waste management, but this is not the case in most of them. For this reason, the need has been identified for a portable facility that can be installed temporarily in the nuclear power plant premises to carry out the treatment and management of operational waste and specifically contaminated metals and waste derived from normal operation, as well as coming from future dismantling tasks.

### SUMMARY OF THE INVENTION

The object of the present invention is to provide a portable and easily removable waste management facility for nuclear power plants.

For this, the invention proposes a facility comprising at least six containers distributed in a facility with two floors/levels: a first lower floor comprising at least four contiguous containers and with their longest edges parallel to each other and a second upper floor comprising two containers separated and placed perpendicular to the lower ones, preferably but not necessarily in each one at the ends of the lower assembly, with their long edges on the short edges of the lower containers. The lower floor and its containers house the waste entry and exit area, a waste management area and changing rooms for staff. The upper floor is adapted to house the supply air treatment facilities, an electrical and control room and the air extraction system. Other optional features are detailed in the dependent claims.

### BRIEF DESCRIPTION OF THE FIGURES

In order to help a better understanding of the features of the invention and to complement this description, the following figures are attached as an integral part thereof, the character of which is illustrative and not limiting:
Figure 1 shows the arrangement of the different workspaces on the two floors.
Figure 2 is a diagram of the entry and exit of packages in the facility for their treatment.
Figure 3 shows the connecting plates between containers.

### DETAILED DESCRIPTION

The objective of the portable facility of the invention is to have a workspace and the necessary means to be able to manage and recondition the waste currently stored at each site, through the application of different processes such as segregation, crushing, compaction, cutting, decontamination or other similar ones. These processes would be carried out with the following purposes:
- Reclassification of activity level / declassification
- Volume reduction
- Conditioning
- Segregation

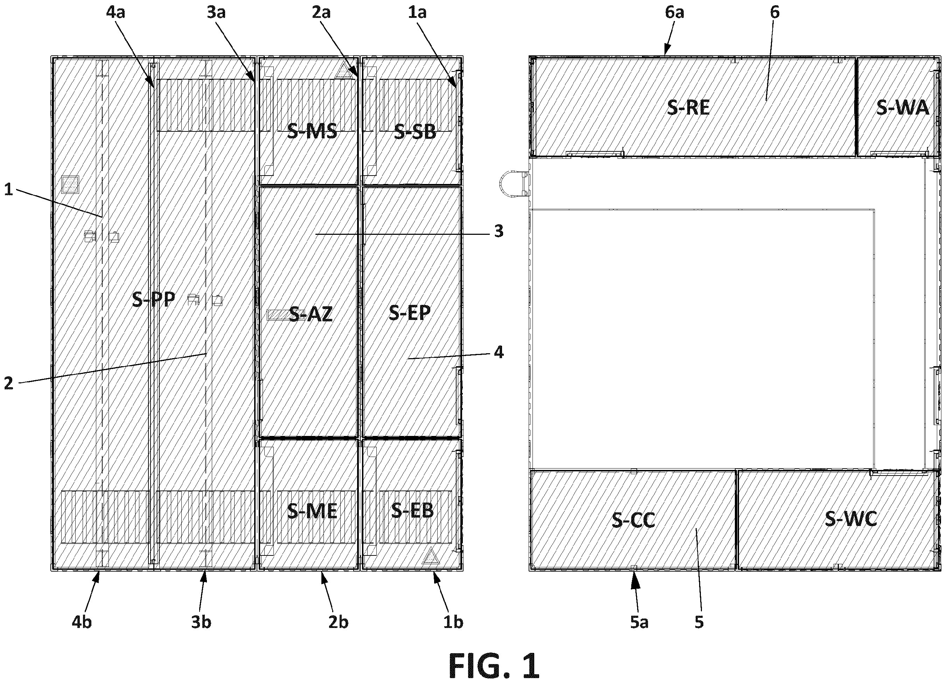

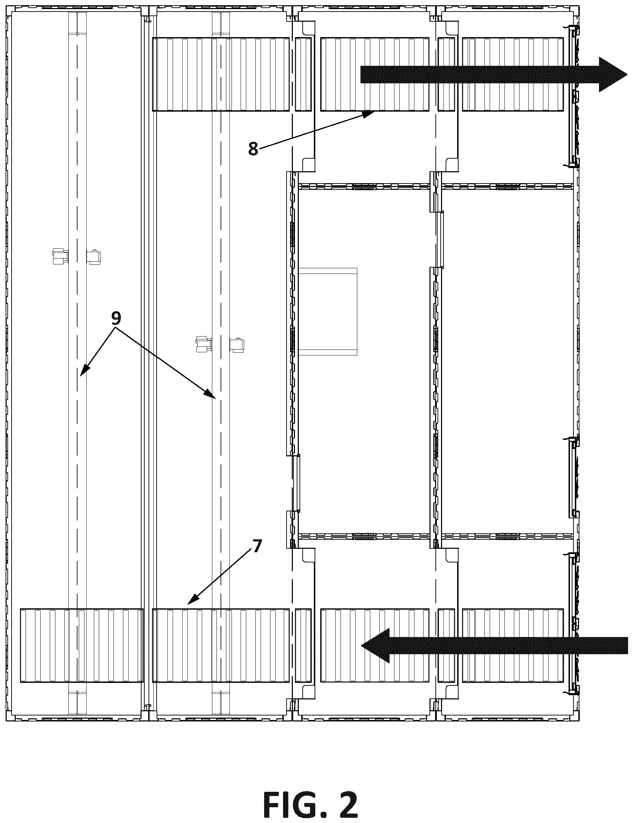

As shown in figures 1 and 2, the main facility consists of at least four lower aluminum or steel containers with dimensions in plan according to the ISO HC standard of 40 inches (40'), placed in parallel to house the waste management area, the entry area, exit area and changing rooms. The dimensions occupied in the floor of the assembly are 9.8 m x 12.2 m. The height of the lower containers has been modified to 3,600 mm (outside). In the upper part, supported by the previous containers, there are two more containers to house the supply air treatment facilities, the electrical and control room and the air extraction system. These upper containers may be positioned perpendicular to the lower four ones, each at one end of the assembly.

As shown in figure 1, this lower floor is divided into the following areas or rooms:
- Personnel entrance room (S-EP)
- Controlled area access room (S-AZ)
- Package entry room (S-EB)
- Entrance package measurement room (S-ME)
- Main process room (S-PP)
- Exit package measurement room (S-MS)
- Package exit room (S-SB)

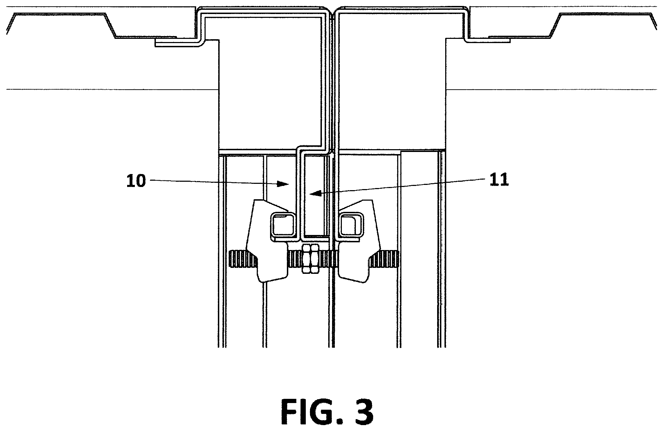

The main process room (S-PP) consists, in a preferential example, of two of the containers. But the design contemplates that the number of containers can be expandable depending on the needs, adding one or more extra containers between the two existing ones. In figure 3, the detail of these joints can be seen. Since these are joints between two containers, the same design can be used to add a central container and the heating, ventilation and air conditioning facility has been sized with sufficient capacity for both alternatives.

The second floor or upper floor consists of two containers: one houses a module classified as a controlled area according to the Sanitary Protection Regulation against Ionizing Radiation for the air extraction system, and the other a module without radiological classification that comprises the air supply / conditioning system and electrical room. These containers are also of the 40 'ISO HC type, with a modified outer length, equivalent to the width of the four containers on the ground floor. The distribution of the rooms in the upper containers is as follows:
- Air extraction treatment room (S-TE)
- Air extraction room (S-EA)
- Air conditioning control room (S-CC)
- Electrical and control room (S-EC)

The facility, once assembled, will ensure water tightness in all the joints and enclosures between rooms and the outside. For its transport, there will be closing panels for the gaps between one container and another with a service joint for its closure.

The type of doors planned for the facility is the following:
- Exterior doors: Airtight steel doors will be provided, with thermal insulation and fire resistance; for example: RF-120.
- Interior doors: for the separation of the rooms for the entry of packages, work area and package exit area, in a preferred example there are roller shutter type doors, in order to facilitate their opening during the use of the facility. In addition, in this way they will not interfere with the roller system for transporting packages.
- Interior doors of the changing room area: There will be airtight steel doors, with thermal insulation and fire resistance, for example: RF-120.

The walls that make up the containers on the inside can optionally have the following elements:
- S275JR non-slip patterned steel sheet floor.
- Stainless steel reinforcement sheets for the work areas.
- Insulated with PUR sandwich panel with density and thickness to be determined in the detailed design, to ensure the required thermal insulation.
- Lining on interior walls with 0.6-1 mm thick AISI 304 stainless steel to facilitate cleaning.
- Edge closure with concave channel (half round).

Containers will advantageously have adjustable supports for their connection with the ground.

The facility has different autonomous systems for its operation:
- Own ventilation, extraction and filtration system, which guarantees a corresponding C3 level confinement in the work area as defined in the ISO 17873 Ed.04 standard. Two HEPA filters can be fitted, but there is also the possibility of fitting a single HEPA filter plus pre-filter if it is possible to connect with the site ventilation system.
- Fire protection system that allows the premature detection of the fire, as well as its extinction, if possible by dry means so that the installation is simplified, and always avoiding liquid agents so as not to generate residues.
- Electrical and instrumentation & control system to power all work and protection equipment, lighting, as well as the control and operation of all elements.
- Radiological conditions monitoring system: area radiation monitors, portable contamination monitors, environmental contamination monitors and personal contamination control gate.

In order to be able to guarantee the best water tightness conditions, it is provided that for those internal walls not being part of the external envelope of the facility, but being part of each container, both walls are maintained (in both containers).

For the joint between containers (figure 3), one of the containers will have a female type connection 10 around the entire joint perimeter. For the joint gaskets, rubber gaskets 11 have been selected whose rigidity allows a correct degree of tightening, guaranteeing the water tightness of the facility. In addition, these gaskets will be removable so that they can be replaced when they are damaged.

The joint of the modules will be made by means of plates and bolts as shown in figure 3.

### Characterization and declassification room

The function of this optional container, separate from the main installation, is to have the necessary equipment to characterize, and if necessary, declassify the waste from the main module, after being treated.

The dimensions of the container will be those of an ISO 40' container (not HC) 12.1x 2.4 mx 2.6 m (L x a x h), and it will consist of two well differentiated areas: i) the measurement room where the different types of waste containers currently accepted by ENRESA for shipment to EI Cabril (CMB, CMT, CMD or 220 I drums) will be placed to be characterized and measurements will be carried out, and the second room ii) the control room, where a small office with two workstations will be located from where the operations to be carried out in the measurement room can be commanded.

The material entry and exit transport to the work room (S-PP) is carried out by means of parallel roller beds (figure 2), which allow a load of up to, for example, 3,500 kg. The roller bed is divided into several sections, each one of them coupled to the module where it is placed. The package transport system does not have any element that moves between rooms, thus avoiding the contamination dispersion.

In the work room (S-PP) there is a turner that, placed under the roller system of the material input circuit, allows the container to be dumped in the work area.

The fixed roller transport system is reinforced at the ends to allow the transfer of the package from one container to another.

The height of the rollers allows cleaning of loose contamination under the rollers. In addition, the rollers are removable (screwed to the ground), so that, if necessary, they can be removed and allow access to parts that could be more voluminous.

The roller conveyors are in a horizontal position, with the rollers in the high position, with a total length of approximately 9,228 mm for the entry and 6,978 mm for the exit conveyor, and a width of 1,250 mm in both cases, so that there is a passage of 800 mm for the personnel accompanying the load along the entry / exit of packages.

The rollers are made of galvanized steel with easy rolling bearings and mining labyrinth, Ø89 mm with a minimum thickness of 3 mm, with a Ø20 mm shaft, being prepared for a maximum load of 3,500 kg.

The pitches between roller axes will be 250 mm in the usual way, adapting this distance in the sections close to the beginning and end of the container, wherein this distance will be reduced in order to keep the distance to be bridged between containers, as well as the necessary distance for closing and the closing mechanism of the doors. The supports to the ground will consist of a bolted anchor plate, so that the conveyors can be disassembled. The working height of the rollers is 250 mm.

Once the package is in the work room (figure 2, S-PP), in some cases it will be required to turn its contents onto the segregation surface. For this, there is a fixed cradle, made of carbon steel, to be able to dump the different packages. This fixed cradle is positioned on the rollers so as not to occupy more floor space.

In the work room (S-PP) each of the modules is equipped with a rail beam formed by a HEA-400, only having pillars at the ends of each container (12 m span). In the case of a third container in the work area, this will also be equipped with the HEA-400 beam. Hoists with a bearing capacity of at least 3.5 tons will be placed under these rail beams, although there will be a central area, wherein their use is restricted to 2 tons in order not to oversize the beam given the 12 m span.

In view of this description and figures, the person skilled in the art will be able to understand that the invention has been described according to some preferred embodiments thereof, but that multiple variations can be introduced in said preferred embodiments, without exceeding the object of the invention as claimed.

## Claims

1. Portable nuclear waste management facility **characterized in that** it comprises at least six ISO HC 40' containers modified in width and height, with at least four containers (1, 2, 3, 4) placed with their longest edges (1a, 2a, 3a, 4a) in parallel forming a first floor of the facility and two other containers placed on the previous ones forming a second floor of the facility, the two upper containers having their long edges (5a, 6a) on the short edges (1b, 2b, 3b, 4b) of the at least four lower containers and wherein the four lower containers comprise openings in the vertical faces delimited by the long edges, wherein said openings are coincident so that they constitute an entrance passage (3) and another exit passage (4) of the facility, wherein the containers are connected to each other by watertight enclosures and wherein the first floor is intended to house a waste management room and changing rooms and the second floor is adapted to house the supply air treatment facilities, an electrical and control room and an air extraction system.

2. Portable nuclear waste management facility according to claim 1, **characterized in that** the watertight enclosures comprise female metal plates (10) and rubber gaskets (11).

3. Portable nuclear waste management facility according to any of the preceding claims, **characterized in that** it is provided with parallel roller beds (7, 8) along the entry (3) and exit (4) passages.

4. Portable nuclear waste management facility according to any of the preceding claims, **characterized in that** the first floor houses a work room (S-PP) between the entry (3) and exit (4) passages and each of the containers is equipped with a rail beam and hoists (9) in the work room area (S-PP).

5. Portable installation according to any of the preceding claims, **characterized in that** it comprises an additional container separated from the first and second floors intended to house a characterization and declassification room.
